# EUROPEAN PATENT APPLICATION

(11) **EP 4 629 423 A1**
(43) Date of publication of application: **08.10.2025**
(21) Application number: 24879888.6
(22) Date of filing: 12.07.2024
(51) Int. Cl.: H01M 50/383, H01M 50/271, H01M 50/317, H01M 50/289, H01M 50/211, H01M 50/249

(54) **BATTERY PACK**

(30) Priority: 16.10.2023 KR 20230137992
(71) Applicant: LG Energy Solution, Ltd., Seoul 07335 (KR)
(72) Inventor: KIM, Kwang-Mo, Daejeon 34122 (KR); JUNG, Hye-Mi, Daejeon 34122 (KR)
(74) Representative: Plasseraud IP
(86) International application number: PCT/KR2024/010020
(87) International publication number: WO 2025/084547

(57) **Abstract**

BATTERY PACK

A battery pack according to an embodiment of the present disclosure may include: a case having an upper opening and configured to provide an inner space; a battery cell accommodated in the case; a pack cover coupled to an upper surface of the case and configured to cover the battery cell; and a venting guide configured to open and close a gap between the pack cover and the battery cell.

## Description

### TECHNICAL FIELD

The present disclosure relates to a battery pack.

The present application claims priority to Korean Patent Application No. 10-2023-0137992 filed on October 16, 2023 in the Republic of Korea, the disclosures of which are incorporated herein by reference.

### BACKGROUND ART

As the demand for portable electronic products such as laptops, video cameras, mobile phones, and the like rapidly increases, and as robots, electric vehicles, and the like are progressively commercialized, active researches on high-performance secondary batteries capable of being repeatedly charged and discharged are underway.

Currently commercialized secondary batteries include nickel-cadmium batteries, nickel-hydrogen batteries, nickel-zinc batteries, and lithium secondary batteries. Among them, lithium secondary batteries are in the spotlight for their advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which positive and negative electrode plates, coated with the positive and negative electrode active materials, respectively, are disposed with a separator therebetween and an exterior case, i.e., a battery case, that stores and seals the electrode assembly with an electrolyte.

In general, lithium secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Recently, secondary batteries have been widely used in medium and large devices for driving or energy storage, such as electric vehicles and energy storage systems (ESSs), as well as in small devices such as portable electronic devices. A plurality of secondary batteries described above may be electrically connected and stored inside a module case to form one battery module. In addition, multiple battery modules described above may be connected to configure one battery pack.

However, in the case where a large number of secondary batteries (battery cells) or a large number of battery modules are densely stored in a small space, they may be vulnerable to a thermal event. In particular, if an event such as thermal runaway occurs in any one battery cell, high-temperature gas, flame, and heat may be generated. If such gas, flame, or heat transfers to other battery cells included in the same battery module, an explosive chain reaction such as thermal propagation may occur. In addition, this chain reaction may cause accidents such as fire or explosion in other battery modules, as well as in the relevant battery module.

Moreover, since medium and large battery packs used in electric vehicles include a large number of battery cells and battery modules to increase output and/or capacity, the risk of a thermal chain reaction may be further increased. In addition, in the case of a battery pack mounted to an electric vehicle or the like, there may be users such as drivers nearby. Accordingly, if a thermal event occurring in a specific battery module fails to be controlled to lead to a chain reaction, it may cause significant property damage and casualties. Therefore, it is necessary to properly control thermal events occurring in the battery cells or modules to improve the thermal safety of the battery pack.

### DISCLOSURE

### Technical Problem

The present disclosure aims to solve the problems described above and other problems.

The present disclosure also aims to provide a battery pack with improved electrical safety when a thermal event occurs.

The present disclosure also aims to provide a battery pack capable of suppressing heat propagation by giving directionality to venting gas flow when a thermal event occurs.

The present disclosure also aims to provide a battery pack including a structure capable of quickly discharging venting gas, ignitable particles, flames, or the like when a thermal event occurs.

The present disclosure also aims to provide a battery pack with easy venting control when a thermal event occurs.

### Technical Solution

According to one aspect of the present disclosure, there is provided a battery pack including: a case having an upper opening and configured to provide an inner space; a battery cell accommodated in the case; a pack cover coupled to an upper surface of the case and configured to cover the battery cell; and a venting guide configured to open and close a gap between the pack cover and the battery cell.

In addition, the venting guide may include a flexible material.

In addition, the venting guide may be configured to be foldable.

In addition, the venting guide may be in oblique contact with the pack cover.

In addition, the venting guide may be configured to be folded to allow flow in one direction and be unfolded to restrict flow in the opposite direction of the one direction.

The battery pack may further include a venting device provided on one side of the case and positioned in the one direction.

The battery pack may further include a module case positioned in the inner space of the case and configured to accommodate the battery cell.

In addition, the venting guide may include: a fixed portion fixed to one side of the module case; and an opening/closing portion extending upward from the fixed portion and configured to open and close the gap.

In addition, an extended length of the opening/closing portion may be greater than a height between the module case and the pack cover.

In addition, the opening/closing portion may be configured to cover an upper surface of the module case.

In addition, the module case may have a venting hole formed on an upper surface.

The battery pack may further include a partition wall configured to partition the inner space of the case,

In addition, the fixed portion may be positioned between the module case and the partition wall.

The battery pack may further include a spacer provided on a top of the partition wall.

In addition, the pack cover may be coupled to the spacer.

A vehicle according to one aspect of the present disclosure may include a battery pack of the present disclosure.

### Advantageous Effects

According to at least one of the embodiments of the present disclosure, thermal safety of a battery pack may be improved.

According to at least one of the embodiments of the present disclosure, heat propagation may be suppressed.

According to at least one of the embodiments of the present disclosure, directionality may be imparted to venting gas flow.

According to at least one of the embodiments of the present disclosure, venting control of a battery pack may be facilitated.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a drawing illustrating a battery pack according to an embodiment of the present disclosure.
FIG. 2 is a partially exploded view of the battery pack in FIG. 1.
FIG. 3 is a drawing illustrating a battery module included in the battery pack in FIG. 1.
FIG. 4 and FIG. 5 are drawings illustrating a venting guide of a battery pack according to an embodiment of the present disclosure.
FIG. 6 is a drawing illustrating folding of a venting guide of a battery pack according to an embodiment of the present disclosure.
FIG. 7 is a partially exploded view of the battery pack in FIG. 1.
FIG. 8 is a drawing illustrating a battery pack with a venting guide installed.
FIG. 9 is an enlarged view of part B in FIG. 8.
FIG. 10 is a cross-sectional view taken along line A-A' in FIG. 1.
FIG. 11 is an enlarged view of part C in FIG. 10.
FIG. 12 is an enlarged view of part C in FIG. 10 when a thermal event occurs.
FIG. 13 is a drawing illustrating the flow of venting gas in part C in FIG. 10.
FIG. 14 is an enlarged view of part D in FIG. 10.
FIG. 15 is an enlarged view of part E in FIG. 10.
FIG. 16 is a cross-sectional view taken along line A-A' in FIG. 1 according to a modified embodiment.
FIG. 17 is an enlarged view of part F in FIG. 16.
FIG. 18 is a drawing illustrating the flow of venting gas in FIG. 16.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

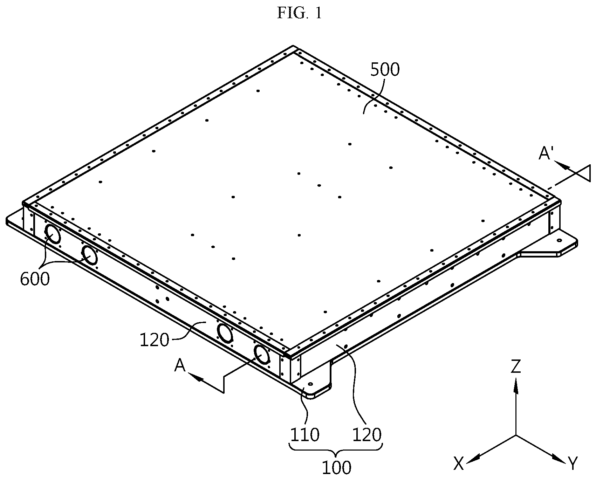

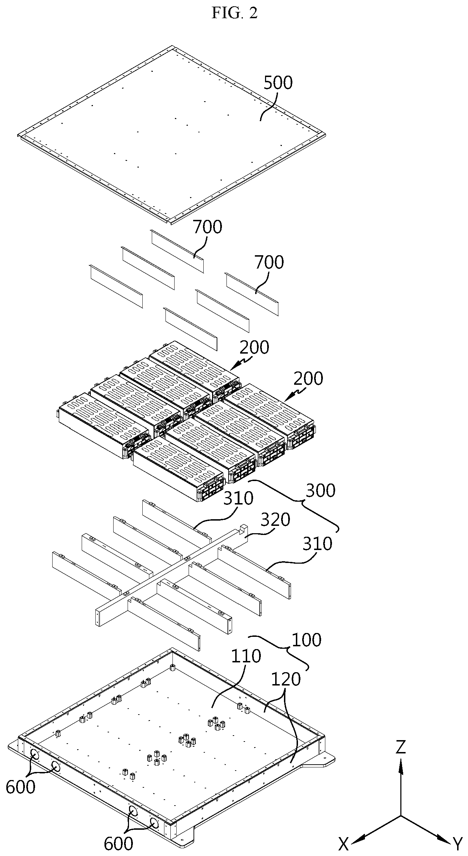

FIG. 1 is a drawing illustrating a battery pack according to an embodiment of the present disclosure. FIG. 2 is a partially exploded view of the battery pack in FIG. 1. Referring to FIGS. 1 and 2, a battery pack according to an embodiment of the present disclosure may include a case 100, a battery cell 220, a pack cover 500, and a venting guide 700.

The case 100 may have a cuboid shape. The case 100 may have an upper opening. The case 100 may provide a space therein. The case 100 may include a base plate 110 and a side wall 120. The base plate 110 may have a rectangular shape. The side wall 120 may be fastened, coupled, or fixed to the upper surface of the base plate 110. The side wall 120 may extend along the perimeter of the base plate 110.

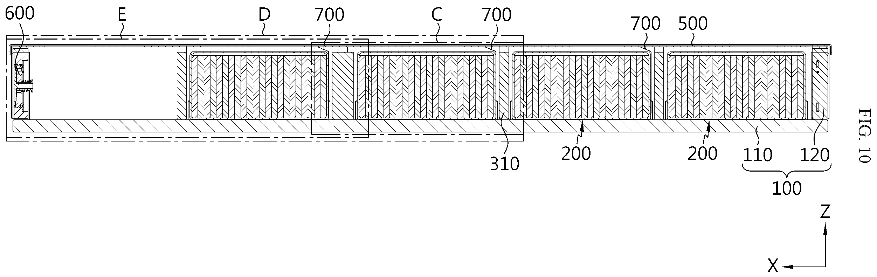

A plurality of battery cells 220 (see FIGS. 10 to 18) may be provided. The battery cell 220 may indicate a secondary battery. The battery cell 220 may have a pouch shape. In addition, the battery cell 220 may be accommodated in a space provided by the case 100. The battery cell 220 may extend in the left-right direction or the Y-axis direction. A plurality of battery cells 220 may be arranged, stacked, or aligned in the front-back direction or the X-axis direction.

The pack cover 500 may have a rectangular shape. The pack cover 500 may have a plate shape. The pack cover 500 may be coupled to the opening of the case 100. The pack cover 500 may be coupled to the upper surface of the case 100. The pack cover 500 may cover the upper surface of the case 100. In addition, the pack cover 500 may be coupled, fixed, or fastened to the side wall 120.

The venting guide 700 may open and close the gap between the pack cover 500 and the battery cell 220. The gap between the pack cover 500 and the battery cell 220 may function as a path through which the venting gas g flows. The venting guide 700 may open and close the path through which the venting gas g flows. The venting guide 700 may provide directionality to the flow of venting gas g. For example, the venting guide 700 may guide the venting gas g to flow in one direction and prevent the venting gas g from flowing in a reverse direction.

According to this configuration of the present disclosure, venting control of the battery pack may be facilitated. The venting guide 700 may provide directionality to the flow of venting gas g. The venting guide 700 may block or suppress thermal propagation to adjacent battery modules 200 by preventing the venting gas g from flowing in the reverse direction. Therefore, the thermal safety of the battery pack may be improved.

Referring to FIGS. 1 and 2, the battery pack according to an embodiment of the present disclosure may include a partition wall 300. The partition wall 300 may partition the inner space. The partition walls 300 may partition the inner space into a plurality of spaces, and a plurality of battery cells 220 may be accommodated in the spaces partitioned by the partition walls 300.

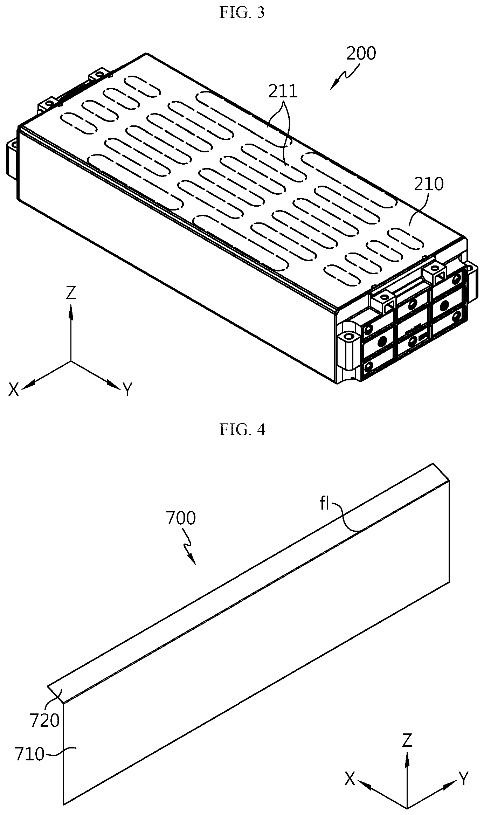

FIG. 3 is a drawing illustrating a battery module 200 included in the battery pack in FIG. 1. Referring to FIGS. 1 to 3, the battery pack according to an embodiment of the present disclosure may include a plurality of battery modules 200. In addition, each battery module 200 may include a module case 210 and a plurality of battery cells 220. The module case 210 may have a cuboid shape. The module case 210 may provide a space therein. In addition, each battery module 200 may include a plurality of battery cells 220. The plurality of battery cells 220 may be accommodated inside the module case 210. The battery modules 200 may be accommodated in spaces partitioned by the partition walls 300.

According to this configuration of the present disclosure, the battery pack may include a plurality of battery modules 200, thereby improving the output of the battery pack. In addition, the battery pack may monitor the status of the battery cell 220 in units of battery modules 200, thereby improving the management efficiency of the battery pack.

Referring to FIGS. 1 to 3, the plurality of battery modules 200 included in the battery pack according to an embodiment of the present disclosure may be configured to enable upward venting. For example, the module case 210 may have a venting hole 211 formed on the upper surface.

Alternatively, the module case 210 may include a notch line on the upper surface. As the pressure inside the battery module 200 increases, at least a portion of the module case 210 may be separated along the notch line to form a venting hole 211.

According to this configuration of the present disclosure, venting control of the battery pack may be facilitated. The venting gas g discharged from the battery module 200 may flow into the gap between the module case 210 and the pack cover 500. In addition, the venting gas g introduced into the gap may flow by the venting guide 700.

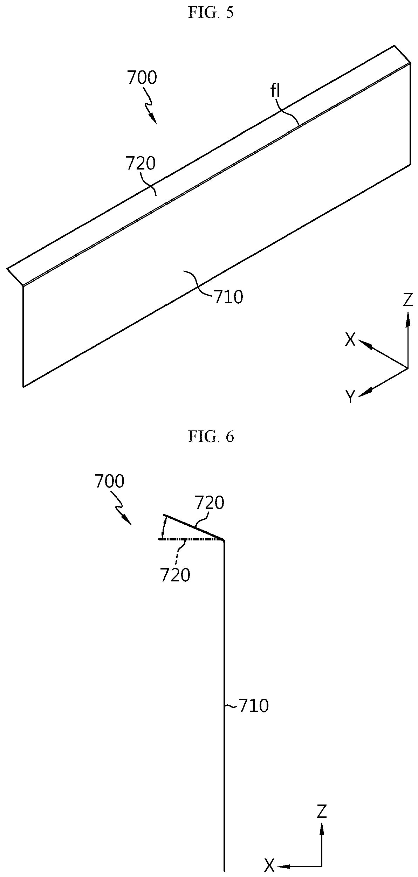

FIG. 4 and FIG. 5 are drawings illustrating a venting guide 700 of a battery pack according to an embodiment of the present disclosure. FIG. 6 is a drawing illustrating folding of a venting guide 700 of a battery pack according to an embodiment of the present disclosure. Referring to FIGS. 4 to 6, the venting guide 700 according to an embodiment of the present disclosure may include a flexible material. At least a portion of the venting guide 700 may be folded or bent.

According to this configuration of the present disclosure, since the venting guide 700 includes a flexible material, the gap between the module case 210 and the pack cover 500 may be easily opened and closed.

Referring to FIGS. 4 to 6, the venting guide 700 according to an embodiment of the present disclosure may be configured to be foldable. The venting guide 700 may have a plate shape. The venting guide 700 may include a fixed portion 710 that is fixed inside the battery pack. The fixed portion 710 may have a square plate shape. The opening/closing portion 720 may extend from the fixed portion 710. The opening/closing portion 720 may extend upward or in the +Z-axis direction from the fixed portion 710. In addition, the opening/closing portion 720 may extend obliquely upward from the fixed portion 710. The venting guide 700 may include a folding line fl formed between the opening/closing portion 720 and the fixed portion 710. The opening/closing portion 720 may pivot around the folding line fl.

According to this configuration of the present disclosure, the gap between the module case 210 and the pack cover 500 may be opened by folding the opening/closing portion 720. In addition, the gap between the module case 210 and the pack cover 500 may be closed by unfolding the opening/closing portion 720. The venting guide 700 may allow the venting gas g to flow by the opening/closing portion 720 being folded. In addition, the venting guide 700 may prevent the backflow of the venting gas g by the opening/closing portion 720 being unfolded.

Referring to FIGS. 4 to 6, the venting guide 700 of the battery pack according to an embodiment of the present disclosure may include a material having high heat resistance or high fire resistance. As a result, the venting guide 700 may not be damaged even when exposed to high-temperature venting gas g or ignitable particles f.

In addition, the venting guide 700 may be configured to have a small thickness of 1 mm or less. Therefore, it may be installed in the battery pack while maintaining the assemblability of the battery module 200.

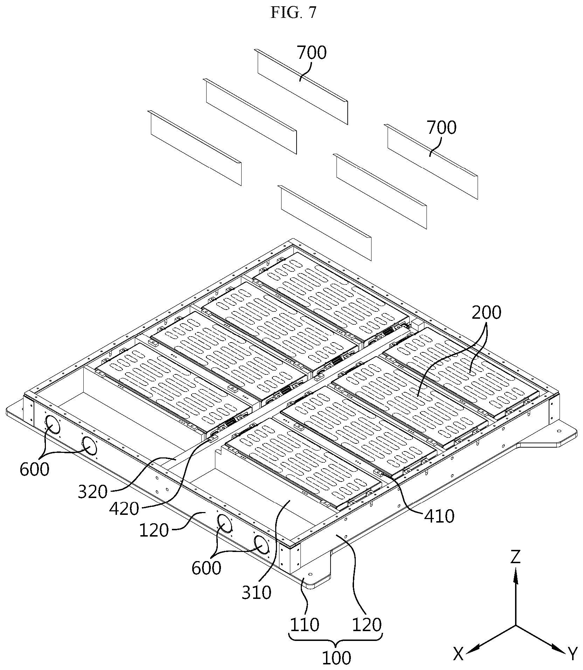

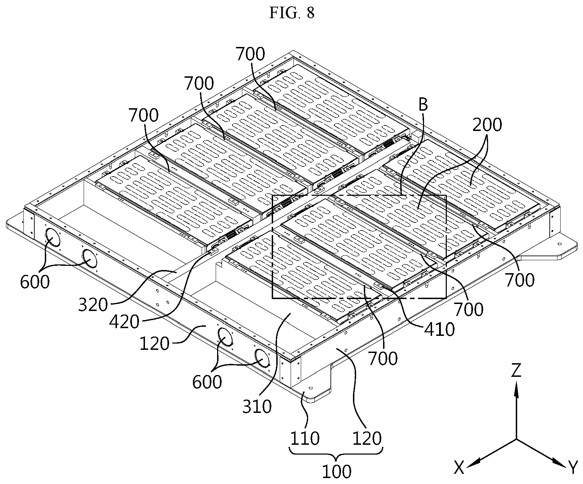

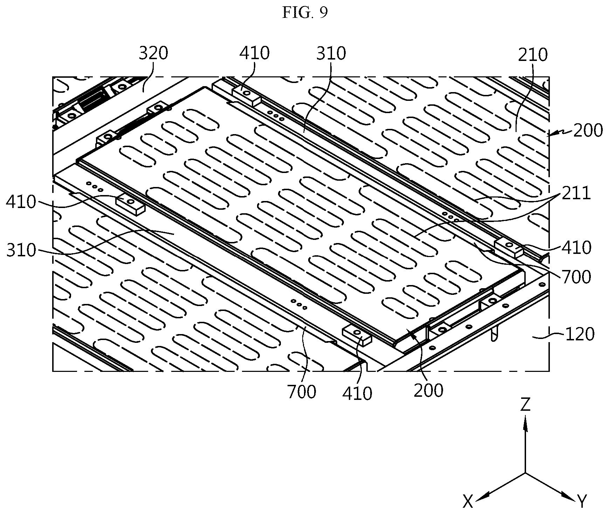

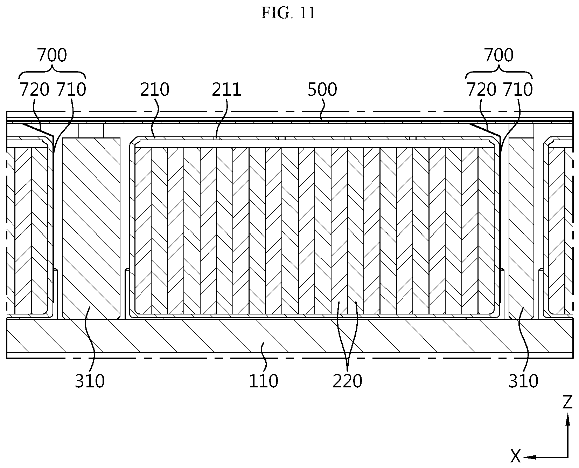

FIG. 7 is a partially exploded view of the battery pack in FIG. 1. FIG. 8 is a drawing illustrating a battery pack with a venting guide 700 installed. FIG. 9 is an enlarged view of part B in FIG. 8. FIG. 10 is a cross-sectional view taken along line A-A' in FIG. 1. FIG. 11 is an enlarged view of part C in FIG. 10.

Referring to FIGS. 7 to 11, the battery pack according to an embodiment of the present disclosure may further include a spacer 410, 420. The spacer 410, 420 may be provided on the top of the partition wall 300. A plurality of spacers 410, 420 may be provided. The pack cover 500 may be coupled to the spacers 410, 420.

The partition wall 300 may include a first partition wall 310. The first partition wall 310 may extend in the left-right direction or the Y-axis direction. A plurality of first partition walls 310 may be provided. The plurality of first partition walls 310 may be arranged, aligned, or positioned in the front-back direction or the X-axis direction. The battery module 200 may be positioned between adjacent first partition walls 310 and between the first partition wall 310 and the side wall 120.

The spacers 410, 420 may include a first spacer 410 provided on the first partition wall 310. A plurality of first spacers 410 may be provided. Each first partition wall 310 may be provided with a pair of first spacers 410.

In addition, the spacers 410, 420 may include a second spacer 420 provided on the second partition wall 320. A plurality of second spacers 420 may be provided.

According to this configuration of the present disclosure, the thermal safety of the battery pack may be improved. A gap may be formed between the partition wall 300 and the pack cover 500 due to the spacers 410, 420. When a thermal event occurs, the venting gas g, ignitable particles f, or flame discharged from the battery cell 220 may flow through the gap between the partition wall 300 and the pack cover 500 and may be discharged to the outside of the battery pack.

Referring to FIGS. 7 to 11, the venting guide 700 according to an embodiment of the present disclosure may be fixed to one side of the module case 210. The fixed portion 710 of the venting guide 700 may be coupled, fixed, fastened, or attached to one side of the module case 210. In addition, the fixed portion 710 may cover one side of the module case 210. In addition, the fixed portion 710 may be provided on one side of the module case 210.

According to this configuration of the present disclosure, the venting guide 700 may be stably supported or fixed. Accordingly, the opening/closing portion 720 may operate stably and the thermal safety of the battery pack may be improved.

Referring to FIGS. 7 to 11, the extension length of the opening/closing portion 720 according to an embodiment of the present disclosure may be configured to be greater than the height between the module case 210 and the pack cover 500. The opening/closing portion 720 may extend obliquely from the fixed portion 710. As a result, the opening/closing portion 720 may be folded in only one direction. For example, the opening/closing portion 720 may be folded in a direction to approach the upper surface of the module case 210. In addition, the opening/closing portion 720 may not be folded in a direction to move away from the module case 210.

According to this configuration of the present disclosure, the venting guide 700 is configured to be folded in only one direction, thereby providing directionality to the flow of venting gas g. In addition, the venting guide 700 may block or suppress thermal propagation to adjacent battery modules 200 by preventing the venting gas g from flowing in a reverse direction. As a result, the thermal safety of the battery pack may be improved.

Referring to FIGS. 7 to 11, the opening/closing portion 720 according to an embodiment of the present disclosure may cover the upper surface of the module case 210. The opening/closing portion 720 may cover the upper surface of the module case 210 in a folded or unfolded state. In addition, the opening/closing portion 720 may come into contact with the upper surface of the module case 210 as it is folded.

According to this configuration of the present disclosure, the opening/closing portion 720 may extend from the fixed portion 710 long enough to cover the upper surface of the module case 210. As a result, the venting guide 700 may provide directionality to the flow of venting gas g.

Referring to FIGS. 7 to 11, the venting guide 700 according to an embodiment of the present disclosure may be in oblique contact with the pack cover 500. The upper end or upper edge of the opening/closing portion 720 may be in contact with the lower surface of the pack cover 500. The opening/closing portion 720 may be in contact with the pack cover 500 while closing the gap between the module case 210 and the pack cover 500. In addition, the contact of the opening/closing portion 720 with the pack cover 500 may be released while opening the gap between the module case 210 and the pack cover 500.

According to this configuration of the present disclosure, since the opening/closing portion 720 comes into contact with the pack cover 500, the backflow of the venting gas g may be more reliably blocked or suppressed. Accordingly, heat propagation of the battery pack may be suppressed.

Referring to FIGS. 7 to 11, the venting guide 700 of the battery pack according to an embodiment of the present disclosure may be positioned between the partition wall 300 and the module case 210. The partition wall 300 may partition the inner space of the case 100. In addition, the partition wall 300 may be disposed along the side of the battery module 200. In addition, the fixed portion 710 may be coupled, fastened, fixed, attached, or positioned between one side of the module case 210 and the partition wall 300. The fixed portion 710 may be coupled, fastened, fixed, attached, or positioned on one side of the module case 210 or one surface of the partition wall 300.

According to this configuration of the present disclosure, the venting guide 700 may be stably supported or fixed. Accordingly, the opening/closing portion 720 may operate stably and the thermal safety of the battery pack may be improved.

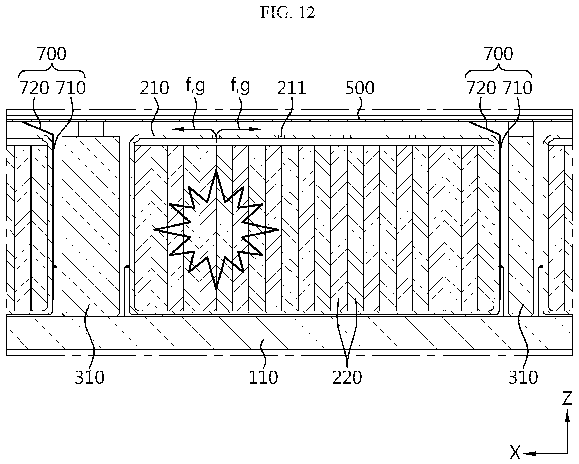

FIG. 12 is an enlarged view of part C in FIG. 10 when a thermal event occurs. Referring to FIG. 12, a thermal event may occur from the battery cell 220 or the battery module 200. In addition, venting gas g and ignitable particles f may be discharged in the upper direction or the Z-axis direction through the venting holes 211 of the battery module 200. The venting gas g and ignitable particles f introduced into the gap between the module case 210 and the pack cover 500 may flow in the +X-axis direction and the -X-axis direction. Alternatively, the venting gas g and ignitable particles f introduced into the gap between the module case 210 and the pack cover 500 may flow in the front-back direction.

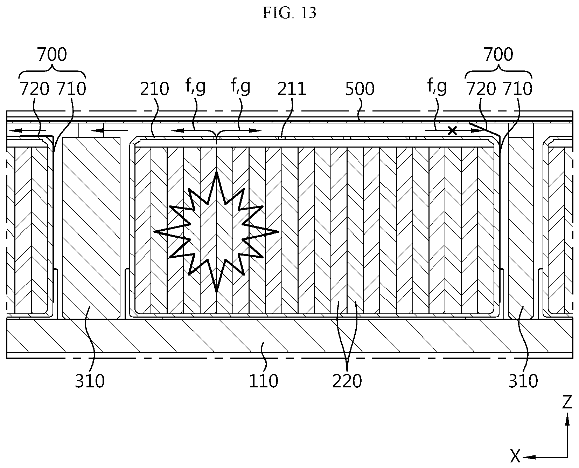

FIG. 13 is a drawing illustrating the flow of venting gas g in part C in FIG. 10. Referring to FIG. 13, the venting gas g and ignitable particles f may fold the opening/closing portion 720 of the venting guide 700 located in front of the battery module 200 where a thermal event occurred. As the opening/closing portion 720 is folded, the gap between the module case 210 and the pack cover 500 may be opened, so the venting gas g and ignitable particles f may move forward or in the +X-axis direction.

On the other hand, the venting gas g and ignitable particles f flowing backward or in the -X-axis direction may collide with the opening/closing portion 720 of the venting guide 700 provided in the battery module 200 where the thermal event occurred. In this case, the opening/closing portion 720 of the venting guide 700 may remain in the closed state. As a result, the venting gas g and ignitable particles f may be blocked or suppressed from flowing in the -X-axis direction.

In addition, since the venting gas g and ignitable particles f are blocked or suppressed from flowing in the -X-axis direction, radiation heat transfer and convective heat transfer through the venting hole 211 of an adjacent battery module 200 may be prevented.

Referring to FIGS. 12 and 13, the venting guide 700 of the battery pack according to an embodiment of the present disclosure may be configured to be folded to allow flow in one direction and to be unfolded to restrict flow in a direction opposite the one direction. For example, the venting guide 700 may allow flow in the +X-axis direction and restrict flow in the -X-axis direction.

According to this configuration of the present disclosure, the venting guide 700 may be configured to be foldable in only one direction, thereby providing directionality to the flow of venting gas g. In addition, the venting guide 700 may block or suppress thermal propagation to the adjacent battery module 200 by preventing the venting gas g from flowing in a reverse direction. Therefore, the thermal safety of the battery pack may be improved.

Referring to FIGS. 7 to 13, the battery pack according to an embodiment of the present disclosure may have a plurality of venting guides 700. The venting guide 700 may be provided for each battery module 200. In addition, the plurality of venting guides 700 may be installed in a folded or bent state in the same direction.

According to this configuration of the present disclosure, even if a thermal event occurs in any one of the plurality of battery modules 200, the venting gas g and ignitable particles f may flow only in the +X-axis direction. Accordingly, thermal propagation of the battery pack may be blocked or suppressed.

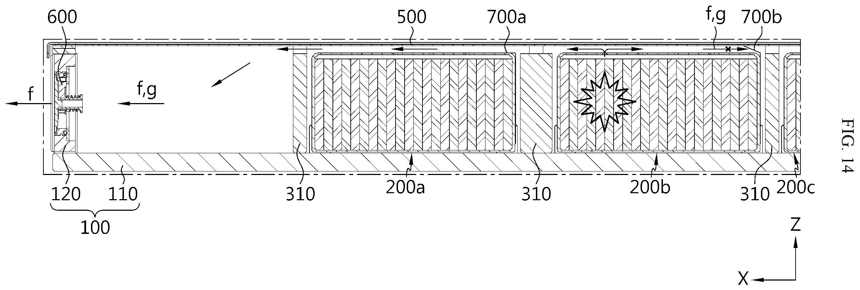

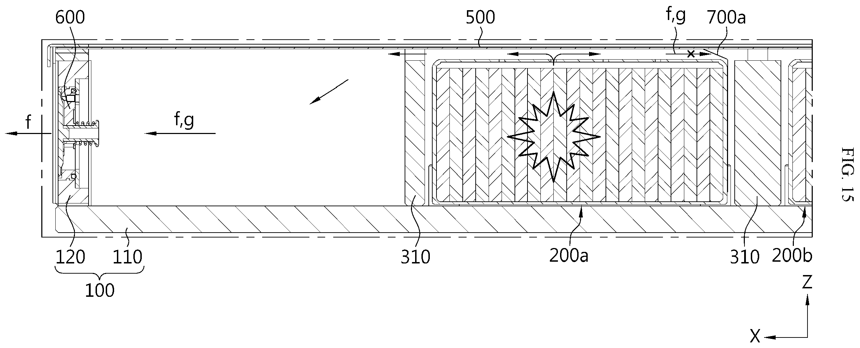

FIG. 14 is an enlarged view of part D in FIG. 10. FIG. 15 is an enlarged view of part E in FIG. 10. Referring to FIGS. 14 and 15, a battery pack according to an embodiment of the present disclosure may further include a venting device 600 provided on one side of the case 100 and positioned in one direction. The venting device 600 may discharge gas inside the case 100 to the outside when the pressure inside the battery pack increases. For example, the venting device 600 may be installed on the front side wall 120. The venting gas g flowing in the +X-axis direction or forward may be discharged to the outside of the case 100 through the venting device 600. In this case, the ignitable particles f flowing in the +X-axis direction or forward may be suppressed or blocked from being discharged to the outside of the case 100 by the venting device 600.

According to this configuration of the present disclosure, the venting gas g may be discharged through the venting device 600 while preventing backflow, thereby minimizing thermal propagation. As a result, the thermal safety of the battery pack may be improved.

Referring to FIG. 14, venting gas g and ignitable particles f generated in a battery module 200b may fold a venting guide 700a provided in a battery module 200a located in the front thereof and flow in the +X-axis direction. In addition, the venting gas g may be discharged to the outside through the venting device 600. In addition, the venting gas g and ignitable particles f may be blocked or suppressed from flowing in the -X-axis direction by a venting guide 700b. Therefore, the thermal propagation to a battery module 200c located at the rear may be suppressed or blocked.

Referring to FIG. 15, the venting gas g generated in the battery module 200a may be discharged to the outside through the venting device 600. In addition, the venting gas g and ignitable particles f may be blocked or suppressed from flowing in the -X-axis direction by the venting guide 700a. Therefore, the thermal propagation to the battery module 200b located at the rear may be suppressed or blocked.

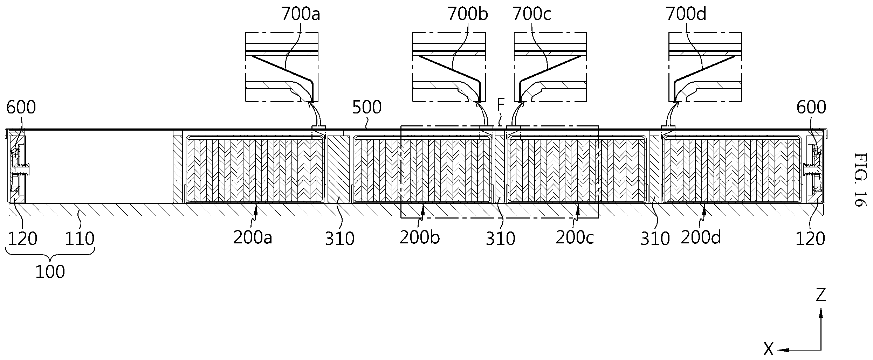

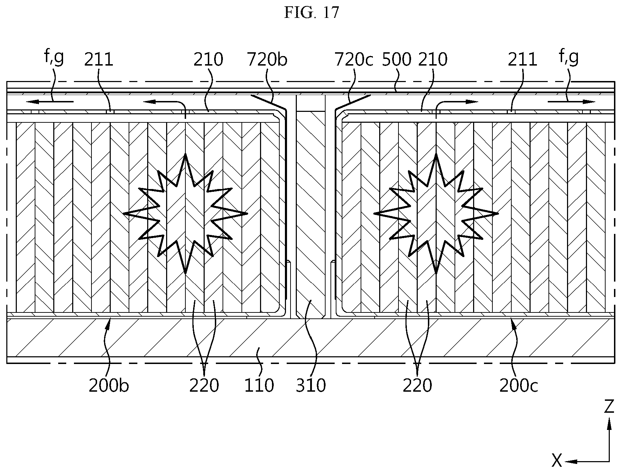

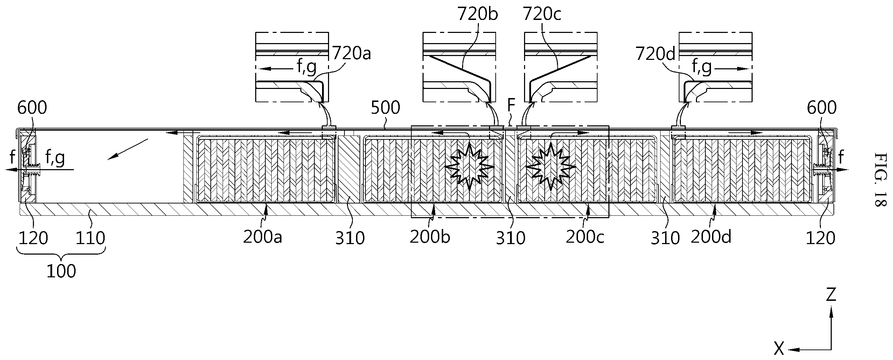

FIG. 16 is a cross-sectional view taken along line A-A' in FIG. 1 according to a modified embodiment. FIG. 17 is an enlarged view of part F in FIG. 16. FIG. 18 is a drawing illustrating the flow of venting gas in FIG. 16. Referring to FIGS. 16 to 18, a battery pack according to an embodiment of the present disclosure may include a venting device 600 provided on each of a front side wall 120 and a rear side wall 120. **In** this case, a plurality of venting guides 700a, 700b, 700c, and 700d may be installed so that the venting gas g may be discharged through the nearest venting device 600.

For example, the venting guides 700a and 700b provided in the battery modules 200a and 200b may be bent or folded toward the +X-axis direction. Accordingly, the venting gas g generated from the battery modules 200a and 200b may be discharged through the venting device 600 provided on the front side wall 120.

**In** addition, the venting guides 700c and 700d provided in the battery modules 200c and 200d may be bent or folded toward the -X-axis direction. Accordingly, the venting gas g generated from the battery modules 200c and 200d may be discharged through the venting device 600 provided on the rear side wall 120.

In addition, the battery pack according to the present disclosure may further include various components, for example, components of the battery pack known at the time of filing the present disclosure, such as a BMS, a bus-bar, a relay, a current sensor, and the like.

A vehicle according to the present disclosure may include the battery pack according to the present disclosure described above. The battery pack according to the present disclosure may be applied to vehicles such as electric vehicles or hybrid vehicles. In addition, the vehicle according to the present disclosure may further include various other components included in the vehicle, such as a car body, a motor, and a control device such as an ECU (electronic control unit), in addition to the battery pack.

Meanwhile, although terms indicating directions such as upward, downward, left, right, front, and back are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a case having an upper opening and configured to provide an inner space;
a battery cell accommodated in the case;
a pack cover coupled to an upper surface of the case and configured to cover the battery cell; and
a venting guide configured to open and close a gap between the pack cover and the battery cell.

2. The battery pack according to claim 1,
wherein the venting guide comprises a flexible material.

3. The battery pack according to claim 1,
wherein the venting guide is configured to be foldable.

4. The battery pack according to claim 3,
wherein the venting guide is in oblique contact with the pack cover.

5. The battery pack according to claim 3,
wherein the venting guide is configured to be folded to allow flow in one direction and be unfolded to restrict flow in the opposite direction of the one direction.

6. The battery pack according to claim 5,
further comprising a venting device provided on one side of the case and positioned in the one direction.

7. The battery pack according to claim 1,
further comprising a module case positioned in the inner space of the case and configured to accommodate the battery cell,
wherein the venting guide comprises:
a fixed portion fixed to one side of the module case; and
an opening/closing portion extending upward from the fixed portion and configured to open and close the gap.

8. The battery pack according to claim 7,
wherein an extended length of the opening/closing portion is greater than a height between the module case and the pack cover.

9. The battery pack according to claim 7,
wherein the opening/closing portion is configured to cover an upper surface of the module case.

10. The battery pack according to claim 7,
wherein the module case has a venting hole formed on an upper surface.

11. The battery pack according to claim 7,
further comprising a partition wall configured to partition the inner space of the case,
wherein the fixed portion is positioned between the module case and the partition wall.

12. The battery pack according to claim 11,
further comprising a spacer provided on a top of the partition wall,
wherein the pack cover is coupled to the spacer.

13. A vehicle including a battery pack of any one of claims 1 to 12.
